(19) Europäisches Patentamt
European Patent Office
Office européen des brevets

(11) **EP 3 521 252 B1**

(12) **EUROPÄISCHE PATENTSCHRIFT**

(45) Veröffentlichungstag und Bekanntmachung des Hinweises auf die Patenterteilung:
**21.10.2020  Patentblatt 2020/43**

(51) Int Cl.:
*C03C 3/21* (2006.01)          *C03C 4/18* (2006.01)
*C03C 10/00* (2006.01)         *H01M 8/0215* (2016.01)

(21) Anmeldenummer: **19155113.4**

(22) Anmeldetag: **01.02.2019**

(54) **GLASKERAMIK MIT IONENLEITENDER RESTGLASPHASE UND VERFAHREN ZU IHRER HERSTELLUNG**

GLASS CERAMIC WITH ION-CONDUCTING RESIDUAL VITREOUS PHASE AND METHOD FOR PRODUCING SAME

VITROCÉRAMIQUE À PHASE VITREUSE RÉSIDUELLE CONDUCTRICE D'IONS ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2018   DE 102018102387**

(43) Veröffentlichungstag der Anmeldung:
**07.08.2019   Patentblatt 2019/32**

(73) Patentinhaber: **Schott AG**
**55122 Mainz (DE)**

(72) Erfinder:
• **Schneider, Meike**
  **65232 Taunusstein (DE)**
• **Roters, Andreas**
  **55118 Mainz (DE)**
• **Schuhmacher, Jörg**
  **70806 Kornwestheim (DE)**
• **Samsinger, Rolf**
  **65428 Rüsselsheim (DE)**

(74) Vertreter: **Fuchs Patentanwälte Partnerschaft mbB**
**Westhafenplatz 1**
**60327 Frankfurt am Main (DE)**

(56) Entgegenhaltungen:
JP-A- 2013 199 386       US-A1- 2012 231 349
US-A1- 2014 220 454

**EP 3 521 252 B1**

**Beschreibung**

Die Erfindung betrifft eine Lithiumionen-leitende Glaskeramik, die eine Restglasphase aufweist, die ebenfalls ionenleitend ist, ein Verfahren zu ihrer Herstellung sowie ihre Verwendung.

Lithium-Ionenbatterien und zukünftige Batteriegenerationen, wie etwa Lithium-Luftbatterien, Lithium-Schwefelbatterien oder All-Solid State Batterien (ASSB), müssen neben einer möglichst hohen Energiedichte auch hohe Ansprüche an Sicherheit und Zuverlässigkeit erfüllen, die über die gesamte Lebensdauer gewährleistet sein müssen. Flüssige Elektrolyten sind hierbei in der Vergangenheit häufig negativ hervorgetreten, da sie leicht entzündlich sind und zu Zersetzungserscheinungen neigen, die zu einem Verlust an Leitfähigkeit und/oder zu unerwünschten Abbauprodukten führen können.

Lithium-Ionen leitende Glaskeramiken für die Verwendung als Festkörperelektrolyte werden bereits seit den 1980er Jahren untersucht. Dabei sind besonders Glaskeramiken mit zu der NaSICon (**Na**trium **S**uper **I**onic **Con**ductor) isostrukturellen Kristallphase $Li_{1+x-y}M_y^{5+}M_x^{3+}M_{2-x-y}^{4+}(PO_4)_3$ von Interesse, da sie z. B. in der Zusammensetzung $Li_{1,3}Al_{0,3}Ti_{1,7}(PO_4)_3$ Leitfähigkeiten von bis zu $10^{-3}$ S/cm und darüber bei Raumtemperatur erreichen können. Diese Kristallphase wird nach den enthaltenen Elementen häufig als LATP (**Li** **A**l **Ti** **P**) bezeichnet. Ionenleitende Materialien mit NaSICon-Struktur können als Keramiken, über Sol-Gel-Prozesse oder als Glaskeramiken hergestellt werden.

Die keramische Herstellung erfolgt in der Regel über eine Festkörperreaktion, teilweise unter Verwendung von Sinteradditiven und/oder Bindern, ohne dass es zu einem homogenen Aufschmelzen des Materials kommt.

Glaskeramiken werden durch ein Aufschmelzen der Rohstoffe zu einem Glas und anschließender Temperaturbehandlung, bei der die gewünschte Kristallphase kristallisiert, hergestellt. Das fertige Material besteht daher aus einer Kristallphase, deren Anteil über den Keramisierungsprozess einstellbar ist, und aus einem amorphen Anteil, der häufig als Restglasphase bezeichnet wird. Im Rahmen dieser Anmeldung werden beide Bezeichnungen synonym verwendet.

Die Herstellung als Glaskeramik bietet dabei den Vorteil der einfachen Skalierbarkeit, was eine kostengünstige industrielle Produktion ermöglicht. Weiterhin können die aus der Glasindustrie bekannten Formgebungsmöglichkeiten genutzt werden. Außerdem lassen sich bei diesem Verfahren durch den Einsatz von Recycling-Material oder Ausschussmaterial aus dem Herstellungsverfahren die Rohstoffkosten reduzieren.

Nachteilig bei der Herstellung der Glaskeramiken mit NaSICon-artiger Kristallphase ist jedoch, dass die Glasphase nur eine verschwindend geringe Lithiumionenleitfähigkeit in der Größenordnung von < $10^{-10}$ S/cm besitzt. Dadurch wird die Gesamtleitfähigkeit des Materials verringert, teilweise um mehr als eine Größenordnung. Auch wenn sich dieses Problem durch eine möglichst vollständige Vermeidung von amorphen Anteilen im fertigen Produkt reduzieren lässt, bleibt oft eine dünne amorphe Schicht zwischen den Kristalliten erhalten, die die Ionenleitung behindert. Zudem müssen, um eine möglichst vollständige Kristallisation zu erreichen, lange Keramisierungszeiten und/oder hohe Temperaturen verwendet werden, was die Energiekosten der Herstellung erhöht.

Der Einsatz von Festelektrolyten wie den beschriebenen Glaskeramiken erfolgt entweder in Form von Pulver, das in ein Polymer eingebettet wird, oder in Form von gesintertem Material, das häufig mit Hilfe eines Tape-Casting Prozesses und anschließendem Sinterprozess hergestellt wird. Hierbei führt das Vorhandensein einer amorphen Phase zwar zu einer Verringerung der Sintertemperaturen, die schlechte Leitfähigkeit der amorphen Phase kann jedoch auch hier zu einer isolierenden Schicht zwischen den Kristalliten führen, die die Leitfähigkeit des gesinterten Produktes vermindert.

Bei der Einbettung in ein Polymer kann die geringe Leitfähigkeit der amorphen Phase dagegen zu einer deutlichen Erhöhung des Übergangswiderstands zwischen Polymer und ionenleitendem Pulver führen.

Stand der Technik

Die Schrift US 2003 0205467 A1 beschreibt die Herstellung von Glaskeramiken aus $P_2O_5$, $TiO_2$, $SiO_2$, $M_2O_3$ (M = Al oder Ga) und $Li_2O$ mit der Hauptkristallphase $Li_{(1+x)}(Al, Ga)_xTi_{(2-x)}(PO_4)_3$ (0 < x $\leq$ 0,8). Nach der Kristallisation wurde eine Ionenleitfähigkeit von 0,6 bis 1,5 $\times$ $10^{-3}$ S/cm erreicht. Die Restglasphase dieser Glaskeramiken weist jedoch eine deutlich niedrigere Leitfähigkeit (typischerweise < $10^{-10}$ S/cm bei Raumtemperatur) auf. Dies erschwert die Verwendung des Materials als gesinterter Elektrolyt oder als Komposit mit einem Polymer.

In der Folge wurden zahlreiche Varianten der Glaskeramiken beschrieben. So führt die Substitution von $TiO_2$ durch $GeO_2$ zu einer deutlichen Erhöhung der Leitfähigkeit und einer Verbesserung der Glasbildung (US 6 030 909 A). Dies ist jedoch bedingt durch die hohen Rohstoffpreise für eine kommerzielle Herstellung nicht umsetzbar.

Die Sinterung von LATP und verwandten Materialien sollte bei möglichst niedriger Temperatur geschehen, da sich bei Temperaturen ab ca. 900 - 950 °C (je nach Sinterbedingungen und Material teilweise auch darunter) $AlPO_4$ als Fremdphase bildet. Dies wurde z. B. von Yu et al. in Functional Materials Letters, Vol. 9, No. 5 (2016) 1650066 beschrieben: sie finden erste Hinweise auf $AlPO_4$ bei 900 °C (0,4 Gew.-%) und bereits bei 950 °C einen Anstieg auf 3,8 Gew.-%. Bei einer für die Herstellung von Sinterlingen üblichen Temperatur von 1100 °C finden sich schon 11,4 Gew.-% $AlPO_4$. Diese Phase hat keine Ionenleitfähigkeit und führt darüber hinaus dazu, dass der Aluminiumgehalt der Kristallphase sich verringert, was wiederum deren Leitfähigkeit verringert. Auch ein Zusammenhang mit der Entstehung von Mikrorissen wird diskutiert.

Zur Verbesserung der Sinterfähigkeit wurde der Zusatz von Sinterhilfsmitteln vorgeschlagen. Wie aus der Keramikindustrie bekannt, lässt sich hierdurch die Sintertemperatur absenken und die Dichte der Sinterkörper erhöhen. Die US Patentanmeldungen US 2011 003212 A1 und US 2012 015234 A1 beschreiben den Einsatz einer borhaltigen Komponente, bevorzugt $B_2O_3$, als Sinterhilfsmittel zur Herstellung einer sogenannten All-Solid State Batterie (ASSB). Hierdurch soll eine Delamination der einzelnen Schichten der Batterie während des Sinterprozesses vermieden werden.

Die Patentanmeldung US 2012 231349 A1 beschreibt einen gesinterten Kompositelektrolyten aus LATP und einem glasigen Sinterhilfsmittel, bevorzugt $LiPO_3$ und/oder $Li_2O$-$B_2O_3$. Hiermit konnten Leitfähigkeiten von bis zu $3 \times 10^{-4}$ S/cm erreicht werden, allerdings unter Verwendung von einer Sintertemperatur von 920 °C. Die Herstellung einer ASSB mit einem ähnlichen Verfahren wird in WO 2013 175993 A1 beschrieben.

Weitere vorgeschlagene Sinterhilfsmittel sind $Li_3BO_3$ oder $Li_{3-x}C_xB_{1-x}O_3$ (US 2016 329539 A1, JP 2016 103381 A1), $Li_2O$-$BPO_4$ (WO 2015 144074 A1) oder $Li_2CO_3$ und $H_3BO_3$ (US 2015 333365 A1).

Die Anmeldung US 2014 220454 A1 beschreibt die Verwendung eines borhaltigen Sinterhilfsmittels mit Glasbildner zur Herstellung einer ASSB, z. B. die Zugabe von $Li_2O$ und $B_2O_3$. Hierdurch wird eine relative Erhöhung der Leitfähigkeit um bis zu 19 % erreicht. Im Gegensatz zur vorliegenden Erfindung werden diese Sinterhilfsmittel jedoch mit dem anderweitig hergestellten LATP gemischt und stellen nicht die Restglasphase einer Glaskeramik dar. Dies hat in der praktischen Herstellung den Nachteil, dass die Herstellung und Mischung beider Komponenten zusätzliche Prozessschritte darstellt, wobei zum Erreichen der notwendigen Homogenität teilweise aufwendige Mischprozesse notwendig sind.

Der direkte Einbau von Bor in NaSICon-artige Kristallphasen (analog zur Dotierung mit Aluminium, wie sie in LATP vorliegt) ist aus dem Stand der Technik bekannt. JP 2225310 A und JP 2302307 A beschreiben eine keramische Herstellung (teilweise unter Verwendung von Schutzgas) mit zahlreichen Dotierstoffen $Li_{1+x}M_xTi_{2-x}(PO_4)_3$ (M = B, Al, Ga, In, Tl, Sc, Y, La, Ce, Pr). Da bei der keramischen Herstellung keine nennenswerte amorphe Glasphase erzeugt wird, muss das Bor, wie die anderen Dotierstoffe, in den Kristall eingebaut werden.

Die Kombination der Dotierstoffe Zink, Fluor und Bor zur Erhöhung der Leitfähigkeit in keramisch hergestelltem NaSICon wird in CN 102456918 A dargestellt. Der Einsatz von Halogeniden wie Fluor führt jedoch bei den zur Herstellung benötigten hohen Temperaturen oft zu Verdampfungsproblemen und kann in Hinblick auf die Arbeitssicherheit bedenklich sein. In der vorliegenden Erfindung werden daher vorzugsweise halogenid-freie Zusammensetzungen eingesetzt.

Eine LATP-Keramik, die eine geringe Menge an Bor enthalten kann (z. B. 0,05 Gew.-%), wird auch in KR 2016 0053147 A dargestellt. Auch hier wird der Einbau von Bor in die Kristallphase beschrieben. Das Material wird in Form eines Pulvers in ein Polymer eingebettet. Eine Restglasphase mit Lithium-Leitfähigkeit wird nicht beschrieben. Die in der vorliegenden Erfindung beschriebene positive Wirkung von $B_2O_3$ wird erst ab höheren Bor-Gehalten von > 0,2 Mol-% (entspricht ca. 0,1 Gew.-%) beobachtet.

Die Patentanmeldung US 2007 202400 A1 beansprucht eine ASSB mit NaSICon-artigem Elektrolyten und Kathodenmaterial derselben Struktur. Der Elektrolyt enthält als gerüstbildendes Polyanion $BO_3$, $BO_4$ oder $PO_4$. Beispiele für eine Kombination von $BO_4$ und $PO_4$ werden jedoch nicht betrachtet. Auch hier erfolgt die Herstellung auf keramischem Weg.

Die Verwendung von Bor als Komponente in Glaskeramik mit NaSICon-Struktur wird in den Anmeldungen JP 2013 155068 A und JP 2013 199386 A beschrieben. JP 2013 155068 A beansprucht ein germaniumhaltiges Glas, das in eine Glaskeramik mit der Hauptphase $Li_{1+x}Al_xGe_{2-x}(PO_4)_3$ (LAGP) umgewandelt werden kann. Das Glas enthält 0,5 - 10 % $B_2O_3$. Auf Grund der hohen Rohstoffkosten von Germanium ist ein solches Glas jedoch nicht für einen breiteren Anwendungsbereich geeignet.

JP 2013 199386 A beansprucht ein Ausgangsglas für eine LATP Glaskeramik, das 2,6 - 10 % $B_2O_3$ enthält. Es werden jedoch bevorzugt höhere Bor-Gehalte von $\geq 4$ % verwendet. In diesem Fall tritt der vorteilhafte Effekt dieser Erfindung, der in der Bildung einer ionenleitfähigen Restglasphase liegt, nicht auf. Um sicher zu stellen, dass sich eine leitfähige Restglasphase bildet, darf diese im Wesentlichen nur $Li_2O$, $B_2O_3$ und $P_2O_5$ enthalten. Das ist der Fall, wenn das molare Verhältnis der nur im Kristall vorliegenden Komponenten $Al_2O_3$ und $TiO_2$ zwischen 0,05 und 1 ist. Höhere Werte des molaren Verhältnisses führen zur Bildung von $AlPO_4$ als Fremdphase, zu geringe Werte führen zu einer Anreicherung von $TiO_2$ in der Restglasphase, was ebenfalls deren Leitfähigkeit vermindert. Weiterhin muss das Verhältnis von $Al_2O_3/Li_2O$ größer als Null und maximal 0,25 sein, um die Bildung von $AlPO_4$ zu unterbinden. Diese Zusammenhänge werden in den vorliegenden Schriften nicht offenbart. Dies führt dazu, dass zur Erreichung von Leitfähigkeiten im Bereich von $10^{-4}$ S/cm höhere Sintertemperaturen eingesetzt werden müssen, in der Regel $\geq 950$ °C.

Die Patentanmeldung WO 2013/180658 A1 beschreibt eine LAGP-Glaskeramik mit geringem Borgehalt von $B_2O_3$ < 0,5 %, bevorzugt < 0,3 %. Der Effekt der erfindungsgemäßen leitfähigen Restglasphase ist bei so niedrigen Borgehalten nur gering und verschwindet bei Werten von < 0,2 % $B_2O_3$. Außerdem wird in der vorliegenden Erfindung, wie oben beschrieben, aus Kostengründen auf den Einsatz von Germanium verzichtet.

In der US-Schrift US 2012 237834 A1 wird die Herstellung einer ASSB beansprucht. Die Batterie enthält dabei zwei verschiedene Elektrolyten, von denen einer ein glaskeramischer Elektrolyt mit NaSICon-Struktur sein kann, der von 0 bis zu 20 % $B_2O_3$, $Al_2O_3$, $Bi_2O_3$, $La_2O_3$, $Y_2O_3$ oder $Sc_2O_3$ enthalten kann. Die Herstellung des Elektrolyten, der außerdem größere Mengen $ZrO_2$ enthält, erfolgt mit einem kombinierten glaskeramischen/keramischen Weg: zunächst wird eine Schmelze ohne $ZrO_2$ hergestellt, die anschließend mit $ZrO_2$ gemischt und kalziniert wird. Der zweite Elektrolyt dient als Sinterhilfsmittel, bevorzugt wird ein Glas mit $T_g$ < 650 °C, z. B. $LiPO_3$, eingesetzt. Eine leitfähige Restglasphase und ein Weg diese herzustellen, wird nicht beschrieben.

Ein Glas, das zu einer Glaskeramik mit NZP-Struktur ($NaZr_2(PO_4)_3$) keramisierbar ist, wird in US 2015 064576 A1 offengelegt. Dabei wird der Phosphor in der Kristallphase teilweise durch Bor ersetzt. Um eine möglichst hohe Leitfähigkeit zu erreichen, wird die Bildung der Restglasphase nach Möglichkeit vermieden und Dotierungen mit mehr als einem Dotierstoff verwendet (Al und Cr, Nb, Ge, Si, ...). Der Einsatz dieser Dotierstoffe hat jedoch, sofern es sich um polyvalente Ionen wie Fe oder Cr handelt, den Nachteil, dass die elektronische Leitfähigkeit ansteigen kann, was bei der Verwendung in einer Batterie zu verstärkter Selbstentladung führt. Der Einsatz von Nb, Ta oder Ge ist aus Kostengründen nachteilig.

Eine weitere Variante der ASSB wird in CN 106876707 A beschrieben. Hier wird eine Dotierung mit Si, Fe oder Bor verwendet, um die Ionenleitfähigkeit der Kristallphase zu verbessern. Eine borhaltige Restglasphase, die eine eigene Ionenleitfähigkeit aufweist, wird nicht beschrieben.

Die Anmeldung WO 2017/141742 A1 beschreibt ein zirkonbasiertes Material mit der Kristallstruktur $Li_{1+x}Zr_{2+y}M1_zM2_w(PO_4)_3$, M1 ist bevorzugt In, Ce, Y, Ca oder Na, ein Teil des Phosphors kann durch Si, B, V ersetzt werden. Der Einsatz von Zirkon statt Titan hat jedoch den Nachteil, dass die Schmelztemperaturen stark erhöht werden müssen, was zu höheren Herstellkosten führt. Weiterhin beobachtet man häufig eine Abnahme der Leitfähigkeit. Aus diesen Gründen ist in der vorliegenden Erfindung der Einsatz von Titan bevorzugt. Wenn Zirkon eingesetzt wird, sollte das Verhältnis $ZrO_2/TiO_2$ kleiner als 1 sein.

Aufgabe der Erfindung

Ausgehend von den beschriebenen Problemen ist es die Aufgabe der Erfindung eine Glaskeramik zu finden und herzustellen, die eine ionenleitfähige Restglasphase ausweist und so die Herstellung eines gesinterten Ionenleiters mit hoher Gesamtleitfähigkeit oder die Einbettung eines Festelektrolytpulvers in ein Polymer mit geringem Übergangswiderstand erlaubt.

Zur Umwandlung (Keramisierung) in erfindungsgemäße Glaskeramiken geeignete Ausgangsgläser sollen eine ausreichende Kristallisationsstabilität ausweisen, so dass sie bevorzugt aus einer Glasschmelze durch Heißformgebung, insbesondere durch Gießen, hergestellt werden können. Zugleich sollen sowohl die Glaskeramiken wie auch die Ausgangsgläser eine ausreichende chemische Stabilität an Luft ausweisen, so dass eine problemlose Lagerung möglich ist. Die Keramisierung und/oder Sinterung sollte vorzugsweise bei Temperaturen von < 1000 °C stattfinden.

Weiterhin sollen die erfindungsgemäßen Glaskeramiken vorzugsweise Verwendungen in Lithiumbatterien finden und die Herstellung von hochleitfähigen Festelektrolyten erlauben. Diese Aufgabe wird durch die erfindungsgemäßen Glaskeramiken gemäß Anspruch 1 gelöst, die eine ionenleitfähige Kristallphase mit NaSICon-Struktur

$$Li_{1+x-y}M_y^{5+}M_x^{3+}M_{2-x-y}^{4+}(PO_4)_3$$

und eine leitfähige Restglasphase, die als Hauptbestandteile $Li_2O$ und $BPO_4$ enthält, sowie das in dem nebengeordneten Anspruch beschriebene Verfahren zu deren Herstellung gelöst. Bevorzugte Ausgestaltungsvarianten sind Gegenstand der abhängigen Ansprüche.

Beschreibung der Erfindung

Im Folgenden werden die erfindungsgemäße Glaskeramik und bevorzugte Ausführungsformen beschrieben.

Die erfindungsgemäße Glaskeramik weist eine Hauptkristallphase auf, die isostrukturell zur NaSICon Kristallphase ist und deren Zusammensetzung sich mit folgender Formel beschreiben lässt: $Li_{1+x-y}M_y^{5+}M_x^{3+}M_{2-x-y}^{4+}(PO_4)_3$, wobei x größer 0 ist und maximal 1, sowie größer als Y kann Werte zwischen 0 und 1 annehmen. Es soll die Randbedingung gelten, dass (1 + x - y) > 1 ist. M steht für ein Kation der Wertigkeit +3, +4 oder +5.

$M^{3+}$ ist ausgewählt aus Al, Y, Sc oder B, wobei mindestens Al als dreiwertiges Kation vorhanden ist. Bevorzugt ist, dass $M^{3+}$ ausgewählt ist aus Al, Y, Sc, weiter bevorzugt liegen alle drei Kationen Al, Y, Sc in der erfindungsgemäßen Glaskeramik vor.

Unabhängig davon ist $M^{4+}$ ausgewählt aus Ti, Si oder Zr, wobei mindestens Ti als vierwertiges Kation vorhanden ist.

Unabhängig davon ist $M^{5+}$ ausgewählt aus Nb, Ta oder La.

In einer weiteren bevorzugten Ausführungsform liegt $Al^{3+}$ als einziges dreiwertiges Ion vor.

In einer weiteren bevorzugten Ausführungsform ist $Ti^{4+}$ das einzige vierwertige Kation.

Weiter bevorzugt sind beide Bedingungen erfüllt, so dass nur $Al^{3+}$ als einziges dreiwertiges Kation in der Glaskeramik vorliegt und gleichzeitig $Ti^{4+}$ als einziges vierwertiges Kation in der Glaskeramik vorliegt.

Auch bevorzugt ist die Nebenbedingung, dass y = 0 ist, demnach also kein fünfwertiges Kation in der Glaskeramik vorliegt.

Gemäß einer weiteren bevorzugten Ausführungsform ist $Al^{3+}$ das einzige dreiwertige Kation, $Ti^{4+}$ das einzige vierwertige Kation und gleichzeitig liegt kein fünfwertiges Kation in der Glaskeramik vor.

Weitere bevorzugte Ausführungsformen der Glaskeramiken enthalten kein Germanium. Das kann die Kosten für die Materialien senken.

Weitere und andere bevorzugte Ausführungsformen enthalten kein Gallium. Gallium als Rohstoff ist wesentlich teurer als Aluminium. Einen positiven Effekt auf die Glaskeramik kann Gallium nicht begründen. Weiter bevorzugt ist die Glaskeramik frei von Oxiden des Galliums.

Der Anteil weiterer und nicht-ionenleitender Kristallphasen in der Glaskeramik ist vorzugsweise < 10 Vol.-%, bevorzugt < 9 Vol.-%, < 8 Vol.-%, < 7 Vol.-%, < 6 Vol.-% und besonders bevorzugt < 5 Vol.-%. Besonders bevorzugt liegen außer der oben beschriebenen Hauptkristallphase keine weiteren Kristallphasen vor.

Die Restglasphase der erfindungsgemäßen Glaskeramik weist eine Lithiumionenleitfähigkeit von mehr als $10^{-5}$ S/cm auf. Sie besteht im Wesentlichen aus den Komponenten $Li_2O$, $B_2O_3$ und $P_2O_3$, wobei besonders nur $B_2O_3$ bevorzugt in der Restglasphase vorliegt. Im Wesentlichen bedeutet hierbei, dass der Anteil anderer Komponenten in der Restglasphase geringer als 20 %, bevorzugt geringer als 15 %, weiter bevorzugt geringer als 10 % ist. Da die Zusammensetzung der Restglasphase in der Regel über eine Analyse nur schwer zugänglich ist, kann zur Bestimmung der Zusammensetzung eine Modellrechnung verwendet werden. Hierbei geht man davon aus, dass eine maximale Menge an LATP kristallisiert und alle übrigen Komponenten in der Restglasphase verbleiben. Als Zusammensetzung des LATPs kann die Zusammensetzung des stöchiometrischen Kristalls $Li_{1,3}Al_{0,3}Ti_{1,7}(PO_4)_3$ angesetzt werden, die 3,75 Mol-% $Al_2O_3$, 16,25 Mol-% $Li_2O$, 37,5 Mol-% $P_2O_5$ und 42,5 Mol-% $TiO_2$ entspricht. Auch wenn die Menge der in den Kristall eingebauten Al-Ionen variieren kann, erlaubt ein solcher Ansatz die Abschätzung der Hauptkomponenten der Restglasphase.

Ein Einbau von Bor in die Kristallphase ist zwar möglich, wird aber in der Regel nur bei Bor-gehalten von > 4 Mol-% beobachtet. Diese hohen Gehalte führen jedoch zu einem unerwünschten Absinken der Leitfähigkeit der Restglasphase.

Der Bor-Gehalt der Glaskeramik beträgt 0,2 Mol-% < $B_2O_3$ < 4 Mol-%, bevorzugt 0,3 Mol-% < $B_2O_3$ < 3 Mol-%, weiter bevorzugt 0,5 Mol-% < $B_2O_3$ ≤ 2,5 Mol-%.

Um sicher zu stellen, dass das in Glaskeramik eingesetzte Aluminium und Titan vollständig in der Kristallphase eingebunden werden kann, enthält die Glaskeramik das oben genannte Verhältnis von $Al_2O_3/TiO_2$.

Die Glaskeramik enthält in einer bevorzugten Ausgestaltung folgende Zusammensetzung (in Mol-%):

1 - 6 % $Al_2O_3$, weiter bevorzugt 2 - 5 %,

12 - 28 % $Li_2O$, weiter bevorzugt 15 - 20 %,

32 - 42 % $P_2O_5$, weiter bevorzugt 34 - 40 %,

28 - 45 % $TiO_2$, weiter bevorzugt 36 - 42 %,

0,2 % < $B_2O_3$ < 4 %, weiter bevorzugt 0,5 < $B_2O_3$ ≤ 2,5 %,

0 - 10 % $SiO_2$,

sowie weitere Bestandteile, z. B. Läuter- oder Flussmittel, 0 bis 3 Mol-%.

Die Glaskeramik ist in ihrer bevorzugten Ausführungsform frei von gesundheitsschädlichen Stoffen, insbesondere frei von Halogeniden, Arsen, Antimon, Cadmium und Chrom mit Ausnahme von unvermeidlichen über Rohstoffe eingetragene Verunreinigungen im Bereich < 1 %.

Um eine Verwendung als Elektrolyt in einer Lithiumbatterie zu erlauben, ist die elektronische Leitfähigkeit der Glaskeramik bevorzugt mindestens um einen Faktor $10^4$ kleiner als die ionische Leitfähigkeit. Daher enthält die Glaskeramik bevorzugt einen möglichst geringen Anteil an polyvalenten Elementen (mit Ausnahme von Titan, das als Kristallbestandteil der Hauptkristallphase dient). Besonders ist der Gehalt an $Fe_2O_3$ geringer als 0,2 Mol-%, bevorzugt geringer als 0,1 Mol-%.

Bevorzugt wird die Glaskeramik aus einem aus einer Glasschmelze hergestellten Ausgangsglas erhalten, wobei das Ausgangsglas während einer Heißformgebung des Ausgangsglases eine vernachlässigbare Kristallisation oder eine Kristallisation von ausschließlich ionenleitenden Kristallphasen aufweist.

Weiterhin wird die Glaskeramik vorzugsweise aus einem Ausgangsglas erhalten, das mit Hilfe einer Ribbonwalze zu Glasribbons geformt wurde, anschließend durch eine Keramisierung in die Glaskeramik umgewandelt wird und anschließend gemahlen wird. Auch Formgebungsverfahren, die eine direkte Darstellung kleiner Partikel ermöglichen, können angewendet werden (z. B. eine Art Spin-Cooling Verfahren). Das Glaskeramikpulver wird dann entweder in einem Sinterprozess zu einem Sinterkörper oder einer gesinterten Schicht verarbeitet oder in ein Polymer eingebettet. Auch ein Einsatz in einem Komposit, z. B. als Elektrodenzusatz ist möglich.

Die Keramisierung und/oder Sinterung erfolgen bevorzugt bei Temperaturen < 1000 °C, weiter bevorzugt < 950 °C, besonders bevorzugt bei Temperaturen ≤ 900 °C.

Das ionenleitende Pulver aus der erfindungsgemäßen Glaskeramik kann mit einem leitfähigen Polymer oder mit einem nicht-leitenden Polymer (gegebenenfalls mit weiteren Additiven wie Leitsalzen oder ionischen Flüssigkeiten) gemischt werden und zeigt dann in Kontakt zu diesem Polymer-Elektrolyten einen geringen Übergangswiderstand von < 1000 $\Omega/cm^2$.

Die erfindungsgemäße Glaskeramik findet vorzugsweise Verwendung als Bestandteil einer Lithiumbatterie, vorzugsweise einer wieder aufladbaren Lithiumbatterie, als Elektrolyt in einer Lithiumbatterie, als Teil einer Elektrode in einer Lithiumbatterie, als Additiv zu einem Flüssigelektrolyten in einer Lithiumionenbatterie oder als Beschichtung auf einer Elektrode in einer Lithiumbatterie.

Als Hauptkristallphase der Glaskeramik bildet sich eine zu NaSICon isostrukturelle Kristallphase mit folgender Zusammensetzung: $Li_{1+x-y}M_y^{5+}M_x^{3+}M_{2-x-y}^{4+}(PO_4)_3$, wobei x größer 0 ist und maximal 1, sowie größer als y. Y kann Werte zwischen 0 und 1 annehmen. Es soll die Randbedingung gelten, dass (1 + x - y) > 1 ist. M steht für ein Kation der Wertigkeit +3, +4 oder +5, wobei mindestens $Al^{3+}$ als dreiwertiges Ion und mindestens $Ti^{4+}$ als vierwertiges Ion enthalten sind.

In einer bevorzugten Ausführungsform enthält die Glaskeramik im Wesentlichen nur $Al^{3+}$ als dreiwertiges Kation und im Wesentlichen nur $Ti^{4+}$ als vierwertiges Kation.

Das Verhältnis der Oxide des Aluminiums und des Titans ($Al_2O_3/TiO_2$) hat einen Wert von 0,05 bis zu 0,1.

Liegen weitere dreiwertige Kationen in der erfindungsgemäßen Glaskeramik vor, so ist das Verhältnis der Kationen des Aluminiums ($Al^{3+}$) zum Gesamtgehalt an 3-wertigen Kationen größer als 0,5, bevorzugt größer als 0,6, besonders bevorzugt größer als 0,75.

Liegen weitere vierwertige Kationen in der erfindungsgemäßen Glaskeramik vor, so ist das Verhältnis der Kationen des Titans ($Ti^{4+}$) zum Gesamtgehalt an 4-wertigen Kationen größer als 0,5, bevorzugt größer als 0,6, besonders bevorzugt größer als 0,75.

Das enthaltene Lithium dient in der erfindungsgemäßen Glaskeramik als Ionenleiter und liegt in der Glaskeramik in einer Menge von mindestens 12 Mol-%, bevorzugt mindestens 15 Mol-% in der Form von $Li_2O$ vor. Weiter bevorzugt sind Mengen von mindestens 18 Mol-%, mindestens 20 Mol-% und bis zu mindestens 22 Mol-%. Der maximale Gehalt an $Li_2O$ in der Glaskeramik beträgt 28 Mol-% und bevorzugt 26 Mol-%, weiter bevorzugt 24 Mol-%. Eine größere Menge an Lithiumoxid bringt keine Vorteile in Hinblick auf die Lithiumionenleitfähigkeit und kann die chemische Stabilität der Glaskeramik beeinträchtigen.

Phosphoroxid wird als Glasbildner eingesetzt und bildet auch das Grundgerüst der Kristallphase der Glaskeramik. Bevorzugt sind Glaskeramiken mit einem Gehalt von 32 bis 42 Mol-% $P_2O_3$. vorzugsweise 34 bis 40 Mol-% und weiter bevorzugt 36 bis 38 Mol-%.

Aluminiumoxid wirkt als Dotierstoff und erhöht die Leitfähigkeit des Kristalls. Zu hohe Gehalte an Aluminiumoxid führen jedoch führen zur Bildung von Fremdphasen wie beispielsweise $AlPO_4$, was sich nachteilig auf die Leitfähigkeit auswirkt. Der Gehalt an Aluminiumoxid ($Al_2O_3$) in der Glaskeramik beträgt 1 bis 6 Mol-% $Al_2O_3$, bevorzugt 2 bis 5 Mol-%.

Der Gehalt von $Al_2O_3$ und $TiO_2$ ist aufeinander abgestimmt, um einerseits die Bildung von Fremdphasen zu vermeiden, andererseits eine Anreicherung der beiden Komponenten in der Restglasphase zu vermeiden, was die Leitfähigkeit der Restglasphase verringert.

Damit die Komponenten $Al_2O_3$ und $TiO_2$ vollständig in die Kristallphase eingebunden werden können und damit die hohe Leitfähigkeit erzielt werden kann, beträgt das Verhältnis der beiden Oxide erfindungsgemäß 0,05 bis 0,1.

Um die Bildung von Fremdphasen zu verhindern, insbesondere von $AlPO_4$, muss die Glaskeramik eine ausreichende Menge an Lithiumoxid im Verhältnis zum Aluminiumoxid aufweisen. Der Wert für das Verhältnis von $Al_2O_3/Li_2O$ ist erfindungsgemäß größer als Null und kleiner als 0,25.

Ein teilweiser Ersatz von dreiwertigen Kationen des Aluminiums durch andere dreiwertige

Elemente, wie beispielsweise Y, La, Ga, Sc, usw. ist möglich, in der Regel jedoch aus Kostengründen eher nachteilig.

Polyvalente Elemente wie Eisen, Chrom oder Vanadium (Fe, Cr, V) werden bevorzugt nicht eingesetzt. Ihr Anteil sollte jeweils kleiner 0,2 % Mol-%, bevorzugt kleiner 0,1 % sein.

Titandioxid ist Bestandteil der Hauptkristallphase und sollte in ausreichender Menge in der Glaskeramik enthalten sein. Bevorzugt enthält die erfindungsgemäße Glaskeramik 28 bis 45 Mol-% $TiO_2$, weiter bevorzugt 36 bis 42 Mol-%.

Ein teilweiser Ersatz von $TiO_2$ durch $ZrO_2$ ist gemäß bevorzugten Ausführungsformen möglich, allerdings sollte für diesen Fall der Anteil des $ZrO_2$ so gewählt werden, dass weder die Gesamtleitfähigkeit verringert wird, noch die Sintertemperaturen zu stark steigen. Der Gehalt an $ZrO_2$ in Mol-% sollte deshalb kleiner sein als der Gehalt an $TiO_2$ in Mol-%. In anderen Worten, das Verhältnis von Zirkoniumdioxid zu Titandioxid ist immer kleiner als 1.

Der optionale Zusatz von bis zu 10 Mol-% $SiO_2$ kann die Glasbildung und/oder die Sinterfähigkeit positiv beeinflussen, bei höheren Gehalten treten jedoch häufig Fremdphasen ohne Ionenleitfähigkeit auf, was die Gesamtleitfähigkeit der Glaskeramik vermindert. Bevorzugte Werte für den Gehalt an $SiO_2$ sind von 0 bis 5 Mol-% und weiter bevorzugt von 0 bis 3 Mol-%.

Als weitere Komponenten kann die erfindungsgemäße Glaskeramik andere Bestandteile enthalten, z. B. übliche Läuter- und Flussmittel, wie etwa $SnO_2$, $As_2O_3$ oder $Sb_2O_3$, in den üblichen Mengen von bis zu 3 Mol-%, vorzugsweise bis zu 1,5 Mol-%. Aus Umweltschutzgründen wird jedoch bevorzugt auf den Einsatz von Arsen und Antimon bei den erfindungsgemäßen Glaskeramiken verzichtet.

Weitere Verunreinigungen, die mit den üblichen technischen Rohstoffen "eingeschleppt" werden, sollten 1 Gew.-%, vorzugsweise 0,5 Gew.-% nicht übersteigen.

Die Glaskeramik sollte, um das Einbringen von unerwünschten Alkalimetall-Ionen in die Lithiumbatterie zu vermeiden, weniger als 0,5 Mol-% andere Alkalimetalloxide (außer Lithiumoxid), bevorzugt weniger als 0,2 Mol-% andere Alkalimetalloxide, enthalten.

Unter einer Glaskeramik im Sinne dieser Anmeldung wird ein Werkstoff verstanden, der ausgehend von einem schmelztechnologisch hergestellten Ausgangsglas durch gezielte Temperaturbehandlung kontrolliert in eine Glaskeramik (mit Glasphase und Kristallphase) umgewandelt wird. Nicht hierunter fallen Materialien ähnlicher Zusammensetzung, die durch Festkörperreaktionen oder Sol-Gel Verfahren hergestellt wurden.

Die Herstellung der Glaskeramik kann entweder direkt durch Keramisieren aus einem Ausgangsglas (Bulkausgangsglas) oder durch Keramisieren und Sintern und/oder Pressen von Ausgangsglaspulver hergestellt werden.

Die Eigenschaft der Ausgangsgläser, ohne spontane Kristallisation beim Guss herstellbar zu sein, ist auch für den Sinterprozess von Vorteil, da im Gegensatz zu bereits teilkristallinem Glaspulver mit nicht- bzw. sehr wenig kristallinem Glaspulver eine dichter gesinterte Glaskeramik hergestellt werden kann.

Die erfindungsgemäßen Glaskeramiken können als Elektrolyt in wieder aufladbaren Lithiumbatterien, besonders in Feststoff-Lithiumbatterien verwendet werden. Dazu können sie entweder als dünne Schicht oder Membran als einziger Elektrolyt oder als Bestandteil des Elektrolyten gemeinsam mit anderem Material (z. B. vermischt mit einem Polymer oder einer ionischen Flüssigkeit) zum Einsatz kommen. Zur Herstellung einer solchen Schicht oder Membran können neben den Formgebungsmöglichkeiten eines Ausgangsglases (Gießen, Ziehen, Walzen, Floaten, usw.) Techniken wie Siebdruck, Foliengießen oder Beschichtungstechniken zum Einsatz kommen.

Auch die Verwendung als Beschichtung auf einer Elektrode, z. B. mit der Auftragung durch Sputterverfahren oder CVD-Verfahren, ist möglich. Weiterhin kann die Glaskeramik auch als Zusatz zur Elektrode (z. B. vermischt mit einem elektronisch leitenden Material) verwendet werden. Auch der Einsatz als Separator in einer mit einem flüssigen Elektrolyten gefüllten Zelle ist denkbar.

Die Erfindung wird anhand folgender Beispiele näher erläutert.

Beispiele

Die einzelnen Ausgangsgläser mit den in der Tabelle 1 aufgeführten Zusammensetzungen wurden bei 1500 bis 1650 °C geschmolzen und zu flachen Gussblöcken (Dicke ca. 3 bis 8 mm, Durchmesser 30 bis 40 mm) gegossen und schnell auf Raumtemperatur abgekühlt. Als Tiegelmaterial wurden Quarzglastiegel oder Pt/Rh Tiegel verwendet.

Aus den Ausgangsgläsern wurden Proben für die Leitfähigkeitsmessungen (Rundscheiben mit einem Durchmesser von 20 mm und einer Dicke von 1 mm) und XRD-Messungen hergestellt.

Die Ausgangsgläser wurden nach einer Keimbildung im Temperaturbereich von 500 °C bis 600 °C für 0 bis 4 Stunden, bei Maximaltemperaturen von 620 bis 850 °C und Haltezeiten 6 bis 12 Stunden, keramisiert (d. h. in Glaskeramiken umgewandelt).

Die verwendeten Keramisierungstemperaturen wurden mit Hilfe einer DTA-Messung (Heizrate 5 K/min) bestimmt.

Test-Polymerelektrolyte wurden in einer Glovebox (MBraun, Wasser-/Sauerstoff-Gehalt < 0,1 ppm) hergestellt.

Dazu wurde Polyethylenoxid (PEO, Molekulargewicht $10^6$ g/mol) mit dem Leitsalz Lithium-bis(trifluoromethansulfonyl)imid (LiTFSI) im Verhältnis Li:O = 1:18 gemischt. Durch Heißpressen ergeben sich flexible Membranen mit einer Leitfähigkeit von weniger als $10^{-5}$ S/cm.

## Tabelle 1

| | Beispiel 1 | | Beispiel 2 | | Beispiel 3 | | Beispiel 4 | | Beispiel 5 | | Vergleichsbeispiel 1 | |
|---|---|---|---|---|---|---|---|---|---|---|---|---|
| | Mol-% | Gew.-% | Mol-% | Gew.-% | Mol-% | Gew.-% | Mol-% | Gew.-% | Mol-% | Gew.-% | Mol-% | Gew.-% |
| $Al_2O_3$ | 3,491 | 3,753 | 3,491 | 3,725 | 3,456 | 3,725 | 3,456 | 3,682 | 3,638 | 3,888 | 9,00 | 9,75 |
| $Li_2O$ | 17,579 | 5,538 | 17,579 | 5,496 | 17,399 | 5,496 | 17,399 | 5,434 | 16,763 | 5,250 | 24,00 | 7,62 |
| $P_2O_5$ | 37,363 | 55,912 | 38,363 | 56,974 | 36,981 | 55,492 | 38,481 | 57,088 | 37,375 | 55,608 | 39,00 | 58,84 |
| $TiO_2$ | 39,568 | 33,330 | 39,568 | 33,077 | 39,164 | 33,079 | 39,164 | 32,704 | 41,225 | 34,525 | 28,00 | 23,78 |
| $B_2O_3$ | 2,000 | 1,468 | 1,000 | 0,728 | 3,000 | 2,208 | 1,500 | 1,091 | 1,000 | 0,730 | | |
| $Al_2O_3/TiO_2$ | 0,0882 | | 0,0882 | | 0,0882 | | 0,0882 | | 0,0882 | | 0,3214 | |
| $Al_2O_3/Li_2O$ | 0,1986 | | 0,1986 | | 0,1986 | | 0,1986 | | 0,2170 | | 0,3750 | |
| Kristallisationspeak (DTA) | n. b. | | 633,9 °C | | n. b. | | 636,5 °C | | n. b. | | n. b. | |
| Keramisierung | 850 °C/12 h | | 850 °C/12 h | | 850 °C/12 h | | 850 °C/12 h | | 850 °C/12 h | | 950 °C/12 h | |
| XRD | $Li_{1+x}Ti_{2-x}Al_x(PO_4)_3$ | | $Li_{1+x}Ti_{2-x}Al_x(PO_4)_3$ Nebenphase: $AlPO_4$ | | $Li_{1+x}Ti_{2-x}Al_x(PO_4)_3$ | | $Li_{1+x}Ti_{2-x}Al_x(PO_4)_3$ Nebenphase: $AlPO_4$ | | $Li_{1+x}Ti_{2-x}Al_x(PO_4)_3$ | | $Li_{1+x}Ti_{2-x}Al_x(PO_4)_3$ $AlPO_4$ | |
| Gesamtleitfähigkeit Glaskeramik (S/cm) | $2,16 \times 10^{-4}$ | | $1,83 \times 10^{-4}$ | | $2,19 \times 10^{-4}$ | | $2,5 \times 10^{-5}$ | | $2,4 \times 10^{-4}$ | | $8 \times 10^{-7}$ | |
| Korn leitfähigkeit Glaskeramik (S/cm) | $9,65 \times 10^{-4}$ | | $8,96 \times 10^{-4}$ | | $1,28 \times 10^{-3}$ | | $6,66 \times 10^{-4}$ | | $6,51 \times 10^{-4}$ | | $1 \times 10^{-3}$ | |
| Leitfähigkeit der Restglasphase (S/cm) | $2,79 \times 10^{-4}$ | | $2,30 \times 10^{-4}$ | | $2,65 \times 10^{-4}$ | | $2,6 \times 10^{-5}$ | | $3,8 \times 10^{-4}$ | | $\ll 10^{-6}$ | |

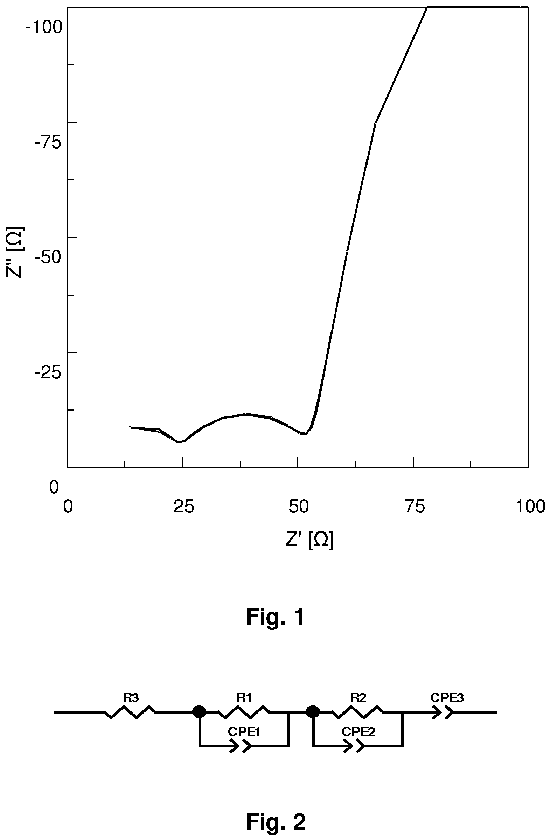

Die Leitfähigkeit wurde mit Hilfe von frequenz- und temperaturabhängigen Impedanzmessungen (Alpha-A-High Performance Analyzer Mainframe der Firma Novocontrol) im Bereich $10^{-2}$ bis $10^7$ Hz mit einer Spannungsamplitude von 20 mV bei Raumtemperatur an mit Gold besputterten Proben gemessen. Die Messungen wurden mit Hilfe der Nyquist-Austragung (Software: ZView von Scribner Associates, Inc.) ausgewertet, die eine Separation von Kornleitfähigkeit und Leitfähigkeit der restlichen Phasen (hier der Restglasphase in Summe mit möglichen Fremdphasen) und die Bestimmung der Gesamtleitfähigkeit erlaubt. Fig. 1 zeigt eine für eine LiSICon-Probe typische Messkurve einer Impedanzmessung an LATP Materialien. Die Messung wird mit Hilfe des Nyquist-Modells angefittet, das auf dem in Fig. 2 dargestellten Ersatzschaltbild beruht.

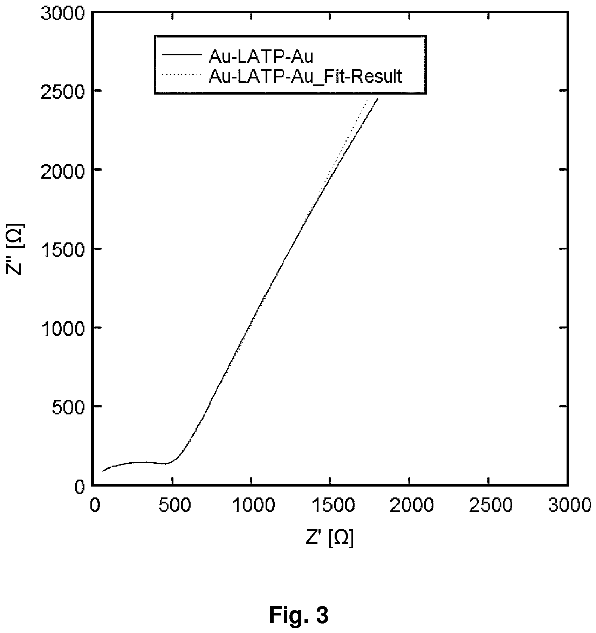

Es ergeben sich zwei Beiträge zu der Leitfähigkeit, die als Halbkreise zu erkennen sind. Auf Grund der gemessenen Kapazitäten lassen sich die Beiträge zuordnen: der linke, kleinere Halbkreis entspricht der Kornleitfähigkeit, d. h. der Leitfähigkeit der Kristallite. Der zweite Beitrag fasst die Leitfähigkeitsbeiträge der restlichen Bestandteile der Glaskeramik zusammen. Er wird von dem Anteil mit der besten Leitfähigkeit dominiert, im Fall der erfindungsgemäßen Glaskeramiken ist dies die Restglasphase (die XRD zeigt nur geringe Mengen an Fremdphasen wie $AlPO_4$, die keine nennenswerte Ionenleitfähigkeit haben). In den erfindungsgemäßen Glaskeramiken liegen die Leitfähigkeiten bzw. die Kapazitäten der Kristallite und der Restglasphase näher beieinander, so dass sich die Beiträge nur mit Hilfe eines Fits trennen lassen (siehe Fig. 3, die eine Impedanzmessung an einer Probe entsprechend Beispiel 2 zeigt).

Die Beispiele 1 - 5 in Tabelle 1 zeigen die vorteilhafte Wirkung der experimentellen Zusammensetzungen. Aus den beschriebenen Zusammensetzungen wurden, wie oben beschrieben, Glaskeramikscheibchen mit einem Durchmesser von 12 mm hergestellt, die zur Kontaktierung mit Gold besputtert und dann mittels Impedanzspektroskopie vermessen wurden.

Die Gesamtleitfähigkeiten sind im Bereich von $10^{-4}$ S/cm, die Kornleitfähigkeiten sogar bis zu $10^{-3}$ S/cm. Diese hohen Gesamtleitfähigkeiten der Glaskeramiken werden erreicht, da die Leitfähigkeiten der Restglasphase ebenfalls im Bereich von $10^{-5}$ S/cm bis $10^{-4}$ S/cm liegen. Das Vergleichsbeispiel 1 zeigt im Gegensatz dazu eine Zusammensetzung ohne Bor, die zwar ebenfalls eine hohe Kornleitfähigkeit von $10^{-3}$ S/cm besitzt, deren Gesamtleitfähigkeit

**Tabelle 2**

| | Beispiel 6 | | Vergleichsbeispiel 2 | | Vergleichsbeispiel 3 | Vergleichsbeispiel 4 | Vergleichs-beispiel 5 |
|---|---|---|---|---|---|---|---|
| | Mol-% | Gew.-% | Mol-% | Gew.-% | Mol-% | Mol-% | Mol-% |
| $Al_2O_3$ | 3,38 | 3,65 | 4,000 | 4,230 | 6 | 4 | 6 |
| $Ga_2O_3$ | | | | | | | |
| $Li_2O$ | 17,96 | 5,69 | 16,000 | 4,960 | 18 | 20 | 18 |
| $P_2O_5$ | 37,08 | 55,80 | 38,000 | 55,980 | 40 | 34 | 38 |
| $TiO_2$ | 38,25 | 32,40 | 42,000 | 34,830 | 32 | 32 | 36 |
| $B_2O_3$ | 3,33 | 2,46 | | | 4 | 10 | 2 |
| $Al_2O_3/TiO_2$ | 0,0882 | | 0,0952 | | 0,1875 | 0,1250 | 0,1667 |
| $Al_2O_3/Li_2O$ | 0,1879 | | 0,2500 | | 0,3333 | 0,0200 | 0,3333 |
| Kristallisationspeak (DTA) | 652 °C | | 669 °C | | n. b. | n. b. | n. b. |
| Keramisierung | 850 °C/12 h | | 950 °C/12 h | | | | Kein Glas |
| XRD | $Li_{1-x}Ti_{2-x}Al_x(PO_4)_3$ | | $Li_{1+x}Ti_{2-x}Al_x(PO_4)_3$ | | $Li_{1+x}Ti_{2-x}Al_x(PO_4)_3$, $AlPO_4$, $LiTiPO_5$ | $Li_{1+x}Ti_{2-x}Al_x(PO_4)_3$, (Spuren: $AlPO_4$, $LiTiPO_5$) | |
| Sintertemp. | 850 °C/12 h | | 1000 °C/12 h | | 1000 °C/30 min. | 1000 °C/30 min. | |
| Leitfähigkeit, gesintert | $4,4 \times 10^{-4}$ S/cm | | $1,3 \times 10^{-6}$ S/cm | | $1 \times 10^{-4}$ S/cm | $1,2 \times 10^{-4}$ S/cm | |
| Sintertemp. | 1200 °C/12 h | | 1200 °C/12 h | | | | |
| Leitfähigkeit, gesintert | $3 \times 10^{-4}$ S/cm | | $1,1 \times 10^{-5}$ S/cm | | | | |

aber nur bei $8 \times 10^{-7}$ S/cm liegt. Die Leitfähigkeit der Restglasphase lässt sich auf Grund des großen Unterschieds zwischen Kornleitfähigkeit und Leitfähigkeit der Restglasphase nicht exakt bestimmen, wird aber als $\ll 10^{-6}$ S/cm abgeschätzt.

Für die Sinterversuche in Tabelle 2 wurden Glasribbons hergestellt. Dazu wurde das flüssige Glas auf zwei rotierende Metallwalzen gegossen. Diese Ribbons wurden bei 850 - 950 °C 12 h lang keramisiert und anschließend gemahlen. Aus dem so erhaltenen Pulver wurden Presslinge hergestellt und gesintert, an denen dann die Leitfähigkeit bestimmt wurde.

Beispiel 6 stellt ein erfindungsgemäßes Beispiel dar. Es zeigt, dass bereits bei einer Sintertemperatur von 850 °C Sinterlinge mit einer Gesamtleitfähigkeit von $4,4 \times 10^{-4}$ S/cm herstellbar sind. Dies ist nicht nur mit Blick auf die Energiekosten sinnvoll, sondern erlaubt auch die Reduktion von Fremdphasenbildung wie $AlPO_4$, die bei Temperaturen $\geq$ 900 °C einsetzt, wie z. B. von Yu et al. in Functional Materials Letters, Vol. 9, No. 5 (2016) 1650066 gezeigt wurde.

Vergleichsbeispiel 2 zeigt eine Zusammensetzung ohne Bor, die deutlich höhere Sintertemperaturen von bis zu 1200 °C erfordert und insgesamt nur eine Leitfähigkeit von $1,1 \times 10^{-5}$ S/cm erreicht.

Vergleichsbeispiel 3 aus dem Stand der Technik beschreibt bekannte Beispiele von LATP Glaskeramiken mit Bor-Zusatz (JP 2013 199386 A). Vergleichsbeispiel 3 enthält jedoch ein im Vergleich zur vorliegenden Erfindung zu hohes Verhältnis von $Al_2O_3/TiO_2$, so dass für eine gute Leitfähigkeit eine Sintertemperatur von 1000 °C erforderlich ist. Dasselbe gilt für Vergleichsbeispiel 4, obwohl hier sogar ein deutlich höherer Borgehalt eingesetzt wurde.

Vergleichsbeispiel 5 zeigt die Wirkung von einem zu hohen $Al_2O_3/Li_2O$ Verhältnis. Die Schmelze zeigte keine ausreichende Glasbildung.

Ferner wurde der Übergangswiderstand von PEO auf eine Glaskeramik mit der Zusammensetzung aus Beispiel 3 bestimmt.

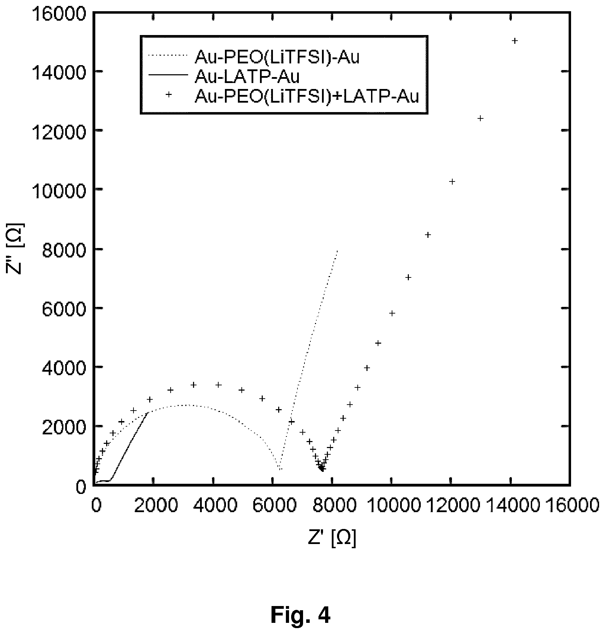

Fig. 4 zeigt das Verfahren zur Bestimmung des Übergangswiderstandes von der Glaskeramik zum Polymerelektrolyten. Dabei wurde eine PEO-Membran bei 60 °C auf die Glaskeramik gepresst. Die Widerstände der Glaskeramik und des Polymers sowie der Übergangswiderstand werden dadurch in Reihe geschaltet. Subtrahiert man die Widerstände der Glaskeramik und des Polymers, so bleibt lediglich der Übergangswiderstand übrig.

Wie in Fig. 4 deutlich wird, ist eine Trennung der einzelnen Beiträge der Glaskeramik und des Polymers nicht möglich, da das Spektrum durch die schlechte Leitfähigkeit von PEO dominiert wird. Dennoch kann der Gesamtwiderstand ermittelt werden. Die Summe der Widerstandsbeiträge der Glaskeramik und dem Übergangswiderstand ist kleiner als der Widerstand des Polymers, die Einbettung der erfindungsgemäßen Glaskeramik als Pulver in PEO-Membranen ist daher sinnvoll und erhöht die Gesamtleitfähigkeit des Hybridsystems.

Als Übergangswiderstand zwischen der Glaskeramik (Zusammensetzung entsprechend Beispiel 2) und dem PEO wurden 610 $\Omega/cm^2$ bestimmt.

## Patentansprüche

1. Lithiumionenleitfähige Glaskeramik,

   wobei die Glaskeramik eine Kristallphase mit der chemischen Zusammensetzung $Li_{1+x-y}M_y^{5+}M_x^{3+}M_{2-x-y}^{4+}(PO_4)_3$ umfasst, wobei gilt:

   $M^{3+}$ = ein dreiwertiges Kation eines oder mehrerer Elemente,
   $M^{4+}$ = ein vierwertiges Kation eines oder mehrerer Elemente,
   $M^{5+}$ = ein fünfwertiges Kation eines oder mehrerer Elemente,
   x ist größer als 0 und maximal 1,
   x ist größer als y,
   y ist 0 bis 1, wobei
   (1 + x - y) größer 1 ist,

   wobei mindestens $Al^{3+}$ als dreiwertiges Ion und mindestens $Ti^{4+}$ als vierwertiges Ion enthalten sind,
   wobei die Glaskeramik eine Glasphase mit einer Ionenleitfähigkeit von mehr als $10^{-5}$ S/cm aufweist,
   wobei die Zusammensetzung der Glasphase $Li_2O$, $P_2O_5$ und $B_2O_3$ umfasst und der Gehalt an $B_2O_3$ Werte von 0,2 Mol-% bis 4 Mol-% hat und
   wobei das Verhältnis von $Al_2O_3/TiO_2$ in der Glaskeramik Werte zwischen 0,05 bis 0,1 hat und
   wobei das Verhältnis von $Al_2O_3/Li_2O$ in der Glaskeramik Werte zwischen > 0 und 0,25 hat.

2. Glaskeramik nach Anspruch 1, wobei die Hauptkristallphase $Li_{1+x-y}M_y^{5+}M_x^{3+}M_{2-x-y}^{4+}(PO_4)_3$ nur $Al^{3+}$ als dreiwer-

tiges Ion und nur $Ti^{4+}$ als vierwertiges Ion enthält.

3. Glaskeramik nach einem der vorhergehenden Ansprüche, wobei diese nach der Keramisierung und/oder Sinterung bei Temperaturen < 1000 °C, bevorzugt < 900 °C, eine Gesamtleitleitfähigkeit von mehr als $10^{-4}$ S/cm bei 22 °C aufweist.

4. Glaskeramik nach einem der vorhergehenden Ansprüche, wobei die Restglasphase im Wesentlichen aus den Komponenten $Li_2O$, $B_2O_3$ und $P_2O_5$ besteht.

5. Glaskeramik nach einem der vorhergehenden Ansprüche, wobei der Gehalt an $B_2O_3$ Werte von 0,3 Mol-% bis 3 Mol-%, bevorzugt 0,5 Mol-% bis 2,5 Mol-% hat.

6. Glaskeramik nach einem der vorhergehenden Ansprüche wobei das Verhältnis $Al_2O_3/Li_2O$ kleiner als 0,24, bevorzugt kleiner als 0,23 und weiter bevorzugt kleiner als 0,22 ist.

7. Glaskeramik nach einem der vorhergehenden Ansprüche, die folgende Zusammensetzung in Mol-% umfasst:

1 - 6 % $Al_2O_3$, bevorzugt 2 - 5 %,
12 - 28 % $Li_2O$, bevorzugt 15 - 20 %,
32 - 42 % $P_2O_5$, bevorzugt 34 - 40 %,
28 - 45 % $TiO_2$, bevorzugt 36 - 42 %,
0,2 % < $B_2O_3$ < 4 %, bevorzugt 0,5 < $B_2O_3 \leq$ 2,5 %.

8. Glaskeramik nach einem der vorhergehenden Ansprüche die im Wesentlichen frei von Halogeniden und/oder Arsen und/oder Antimon und/oder Cadmium und/oder Chrom ist.

9. Glaskeramik nach einem der vorhergehenden Ansprüche, die frei von $GeO_2$ ist.

10. Glaskeramik nach einem der vorhergehenden Ansprüche, die frei von $GaO_2$ ist.

11. Glaskeramik nach einem der vorhergehenden Ansprüche wobei der Gehalt an $Fe_2O_3$ Werte von kleiner als 0,2 Mol-%, bevorzugt kleiner als 0,1 % Mol-% hat.

12. Verfahren zur Herstellung eines glaskeramischen Elektrolytmaterials nach einem der vorhergehenden Ansprüche mit einer Hauptkristallphase $Li_{1+x-y}M_y^{5+}M_x^{3+}M_{2-x-y}^{4+}(PO_4)_3$ und einer Restglasphase mit einer Leitfähigkeit größer als $10^{-5}$ S/cm bei 22 °C mit den Schritten

a) Schmelzen der Rohstoffe und Homogenisieren des Ausgangsglases,
b) Gießen und Kühlen des Ausgangsglases,
c) Keramisieren des Ausgangsglases bei Temperaturen zwischen 750 - 1000 °C, bevorzugt 850 - 950 °C,
d) Mahlen des keramisierten Ausgangsglases zu einem Pulver und
e) Sintern des Pulvers.

13. Verfahren zur Herstellung eines glaskeramischen Elektrolytmaterials gemäß Anspruch 12, wobei zusätzlich als Schritt e) das Pulver mit einem organischen Material gemischt wird.

14. Verfahren zur Herstellung eines glaskeramischen Elektrolytmaterials gemäß Anspruch 13, wobei das organische Material ein Polymer ist.

15. Verwendung einer Glaskeramik nach einem der Ansprüche 1 bis 11 als Bestandteil einer Lithiumbatterie, einer All-Solid State Batterie, einer Solid-State-Batterie mit Polymer / Festelektrolyt Komposit, einer Lithium-Schwefel- oder Lithium-Luft-Batterie, als Elektrolyt oder als Teil einer Elektrode in einer der genannten Batterien, als Additiv zu einem Flüssigelektrolyten in einer Lithiumionenbatterie, als Bestandteil eines Polymerelektrolyten oder eines Kompositelektrolyten oder als Beschichtung auf einer Elektrode oder einem Separator in einer Lithiumbatterie.

**EP 3 521 252 B1**

**Claims**

1. A lithium ion-conductive glass ceramic,
   wherein the glass ceramic comprises a crystal phase having the chemical composition of $Li_{1+x-y}M_y^{5+}M_x^{3+}M_{2-x-y}^{4+}(PO_4)_3$, wherein the following is true:

   $M^{3+}$ = a trivalent cation of one or several elements,
   $M^{4+}$ = a tetravalent cation of one or several elements,
   $M^{5+}$ = a pentavalent cation of one or several elements,
   x is higher than 0 and at most 1,
   x is higher than y,
   y is 0 to 1, wherein
   (1 + x - y) is higher than 1,
   wherein at least $Al^{3+}$ as trivalent ion and at least $Ti^{4+}$ as tetravalent ion are contained,
   wherein the glass ceramic comprises a vitreous phase with an ionic conductivity of higher than $10^{-5}$ S/cm,
   wherein the composition of the vitreous phase comprises $Li_2O$, $P_2O_5$ and $B_2O_3$, and values of the content of $B_2O_3$ are from 0.2 % by mole to 4 % by mole, and
   wherein values of the ratio of $Al_2O_3/TiO_2$ in the glass ceramic are between 0.05 to 0.1, and
   wherein values of the ratio of $Al_2O_3/Li_2O$ in the glass ceramic are between > 0 and 0.25.

2. The glass ceramic according to claim 1, wherein the main crystal phase $Li_{1+x-y}M_y^{5+}M_x^{3+}M_{2-x-y}^{4+}(PO_4)_3$ contains only $Al^{3+}$ as trivalent ion and only $Ti^{4+}$ as tetravalent ion.

3. The glass ceramic according to one of the preceding claims, wherein, after ceramizing and/or sintering at temperatures of < 1000 °C, preferably < 900 °C, it has a total conductivity of higher than $10^{-4}$ S/cm at 22 °C.

4. The glass ceramic according to one of the preceding claims, wherein the residual vitreous phase substantially consists of the components $Li_2O$, $B_2O_3$ and $P_2O_5$.

5. The glass ceramic according to one of the preceding claims, wherein values of the content of $B_2O_3$ are from 0.3 % by mole to 3 % by mole, preferably 0.5 % by mole to 2.5 % by mole.

6. The glass ceramic according to one of the preceding claims, wherein the ratio $Al_2O_3/Li_2O$ is lower than 0.24, preferably lower than 0.23 and further preferably lower than 0.22.

7. The glass ceramic according to one of the preceding claims, which comprises the following composition in % by mole:

   1 - 6 % $Al_2O_3$, preferably 2 - 5 %,
   12 - 28 % $Li_2O$, preferably 15 - 20 %,
   32 - 42 % $P_2O_5$, preferably 34 - 40 %,
   28 - 45 % $TiO_2$, preferably 36 - 42 %,
   0.2 % < $B_2O_3$ < 4 %, preferably 0.5 < $B_2O_3 \leq$ 2.5 %.

8. The glass ceramic according to one of the preceding claims, which is substantially free of halides and/or arsenic and/or antimony and/or cadmium and/or chromium.

9. The glass ceramic according to one of the preceding claims, which is free of $CeO_2$.

10. The glass ceramic according to one of the preceding claims, which is free of $CaO_2$.

11. The glass ceramic according to one of the preceding claims, wherein values of the content of $Fe_2O_3$ are lower than 0.2 % by mole, preferably lower than 0.1 % by mole.

12. A method for the production of a glass-ceramic electrolyte material according to one of the preceding claims with a main crystal phase of $Li_{1+x-y}M_y^{5+}M_x^{3+}M_{2-x-y}^{4+}(PO_4)_3$ and a residual vitreous phase having a conductivity of higher than $10^{-5}$ S/cm at 22 °C with the steps of

    a) melting the raw materials and homogenizing the starting glass,

b) casting and cooling the starting glass,
c) ceramizing the starting glass at temperatures of between 750 - 1000 °C, preferably 850 - 950 °C,
d) grinding the ceramized starting glass to a powder and
e) sintering the powder.

13. The method for the production of a glass-ceramic electrolyte material according to claim 12, wherein in addition as step e) the powder is mixed with an organic material.

14. The method for the production of a glass-ceramic electrolyte material according to claim 13, wherein the organic material is a polymer.

15. A use of a glass ceramic according to one of claims 1 to 11 as constituent of a lithium battery, an all-solid state battery, a solid-state battery with polymer/solid electrolyte-composite, a lithium-sulfur- or lithium-air-battery, as electrolyte or as part of an electrode in one of the mentioned batteries, as additive for a liquid electrolyte in a lithium ion battery, as constituent of a polymer electrolyte or a composite electrolyte or as coating on an electrode or a separator in a lithium battery.

**Revendications**

1. Vitrocéramique conductrice d'ions de lithium,
   dans laquelle la vitrocéramique comprenant une phase cristalline avec la composition chimique
   $Li_{1+x-y}M_y^{5+}M_x^{3+}M_{2-x-y}^{4+}(PO_4)_3$, où :

   $M^{3+}$ = un cation trivalent d'un ou plusieurs éléments,
   $M^{4+}$ = un cation tétravalent d'un ou plusieurs éléments,
   $M^{5+}$ = un cation pentavalent d'un ou plusieurs éléments,
   x est supérieur à 0 et maximum de 1,
   x est supérieur à y,
   y est de 0 à 1, où
   (1 + x - y) est supérieur à 1,
   dans laquelle sont contenus au moins de $Al^{3+}$ sous forme d'ion trivalent et au moins $Ti^{4+}$ sous forme d'ion tétravalent,
   dans laquelle la vitrocéramique présente une phase vitreuse avec une conductivité ionique supérieure à $10^{-5}$ S/cm,
   dans laquelle la composition de la phase vitreuse comprend des composants $Li_2O$, $P_2O_5$ et $B_2O_3$ et la teneur en $B_2O_3$ a des valeurs de 0,2 % mol à 4 % mol et
   dans laquelle le rapport $Al_2O_3/TiO_2$ dans la vitrocéramique a des valeurs comprises entre 0,05 et 0,1 et le rapport $Al_2O_3/Li_2O$ dans la vitrocéramique a des valeurs comprises entre > 0 et 0,25.

2. Vitrocéramique selon la revendication 1, dans laquelle la phase cristalline principale $Li_{1+x-y}M_y^{5+}M_x^{3+}M_{2-x-y}^{4+}(PO_4)_3$ contient uniquement $Al^{3+}$ comme ion trivalent et uniquement $Ti^{4+}$ comme ion tétravalent.

3. Vitrocéramique selon l'une quelconque des revendications précédentes qui, après céramisation et/ou frittage à des températures < 1000 °C, de préférence < 900 °C, présente une conductivité totale supérieure à $10^{-4}$ S/cm à 22 °C.

4. Vitrocéramique selon l'une quelconque des revendications précédentes, dans laquelle la phase vitreuse résiduelle est constituée sensiblement des composants $Li_2O$, $B_2O_3$ et $P_2O_5$.

5. Vitrocéramique selon l'une quelconque des revendications précédentes, dans laquelle la teneur en $B_2O_3$ a des valeurs de 0,3 % mol à 3 % mol, de préférence de 0,5 % mol à 2,5 % mol.

6. Vitrocéramique selon l'une quelconque des revendications précédentes, dans laquelle le rapport $Al_2O_3/Li_2O$ est inférieur à 0,24, de préférence inférieur à 0,23 et plus préférablement inférieur à 0,22.

**7.** Vitrocéramique selon l'une quelconque des revendications précédentes, qui comprend la composition suivante en % mol :

> 1 - 6 % $Al_2O_3$, de préférence 2 - 5 %,
> 12 - 28 % $Li_2O$, de préférence 15 - 20 %,
> 32 - 42 % $P_2O_5$, de préférence 34 - 40 %,
> 28 - 45 % $TiO_2$, de préférence 36 - 42 %,
> 0,2 % < $B_2O_3$ < 4 %, de préférence 0,5 < $B_2O_3 \leq$ 2,5 %.

**8.** Vitrocéramique selon l'une quelconque des revendications précédentes qui est sensiblement exempte d'halogénures et/ou d'arsenic et/ou d'antimoine et/ou de cadmium et/ou de chrome.

**9.** Vitrocéramique selon l'une quelconque des revendications précédentes, qui est exempte de $GeO_2$.

**10.** Vitrocéramique selon l'une quelconque des revendications précédentes, qui est exempte de $GaO_2$.

**11.** Vitrocéramique selon l'une quelconque des revendications précédentes, dans laquelle la teneur en $Fe_2O_3$ a des valeurs inférieures à 0,2 % mol, de préférence inférieures à 0,1 % mol.

**12.** Procédé de fabrication d'un matériau électrolytique vitrocéramique selon l'une quelconque des revendications précédentes avec une phase cristalline principale $Li_{1+x-y}M_y^{5+}M_x^{3+}M_{2-x-y}^{4+}(PO_4)_3$ et une phase vitreuse résiduelle avec une conductivité supérieure à $10^{-5}$ S/cm à 22 °C avec les étapes consistant à

> a) faire fondre les matières premières et homogénéiser le verre de départ,
> b) verser et refroidir le verre de départ,
> c) céramiser le verre de départ à des températures comprises entre 750 - 1000 °C, de préférence 850 - 950 °C,
> d) broyer en poudre le verre de départ céramisé et
> e) fritter la poudre.

**13.** Procédé de fabrication d'un matériau électrolytique vitrocéramique selon la revendication 12, dans lequel la poudre est en outre mélangée à un matériau organique à l'étape e).

**14.** Procédé de fabrication d'un matériau électrolytique vitrocéramique selon la revendication 13, dans lequel le matériau organique est un polymère.

**15.** Utilisation d'une vitrocéramique selon l'une quelconque des revendications 1 à 11 en tant que partie constituante d'une batterie au lithium, d'une batterie à l'état solide, d'une batterie à l'état solide avec un composite polymère/électrolyte solide, d'une batterie au lithium-soufre ou au lithium-air, en tant qu'électrolyte ou en tant que partie d'une électrode dans l'une des batteries mentionnées, en tant qu'additif à un électrolyte liquide dans une batterie au lithium-ion, en tant que partie constituante d'un électrolyte polymère ou d'un électrolyte composite ou en tant que revêtement sur une électrode ou un séparateur dans une batterie au lithium.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030205467 A1
- US 6030909 A
- US 2011003212 A1
- US 2012015234 A1
- US 2012231349 A1
- WO 2013175993 A1
- US 2016329539 A1
- JP 2016103381 A
- WO 2015144074 A1
- US 2015333365 A1
- US 2014220454 A1
- JP 2225310 A

- JP 2302307 A
- CN 102456918 A
- KR 20160053147 A
- US 2007202400 A1
- JP 2013155068 A
- JP 2013199386 A
- WO 2013180658 A1
- US 2012237834 A1
- US 2015064576 A1
- CN 106876707 A
- WO 2017141742 A1

**In der Beschreibung aufgeführte Nicht-Patentliteratur**

- **YU et al.** *Functional Materials Letters,* 2016, vol. 9 (5), 1650066